# EUROPÄISCHE PATENTSCHRIFT

(11) **EP 1 538 737 B1**
(45) Veröffentlichungstag und Bekanntmachung des Hinweises auf die Patenterteilung: **15.02.2012**
(21) Anmeldenummer: 03405873.5
(22) Anmeldetag: 05.12.2003
(51) Int. Cl.: H02P 6/18, H02P 8/14

(54) **Verfahren zum Einstellen einer Klappe und Aktuator zum Einstellen einer Klappe**
Method for setting a flap and actuator for setting a flap
Procédé de réglage d'un clapet et actionneur de réglage d'un clapet

(43) Veröffentlichungstag der Anmeldung: 08.06.2005
(73) Patentinhaber: Johnson Electric Switzerland AG, 3280 Murten (CH)
(72) Erfinder: Brügger, Philippe, 1791 Courtaman (CH); Engel, Andreas, 3280 Murten (CH); Cyrus, Christophe, 1721 Misery (CH)
(74) Vertreter: Seehof, Michel

(56) Entgegenhaltungen:
- EP-A- 0 142 465
- EP-A- 0 242 039
- DE-A- 10 050 239
- US-A1- 2003 076 068
- US-B1- 6 218 795

## Beschreibung

Die Erfindung bezieht sich auf ein Verfahren zum Einstellen einer Klappe gemäss Oberbegriff des Anspruchs 1 sowie auf eine Heizungs-, Lüftungs- und/oder Klimaanlage mit einem Aktuator mit einer Ansteuerungselektronik gemäss Oberbegriff des unabhängigen Vorrichtungsanspruchs 4.

Ansteuerungselektronik und Verfahren der eingangs erwähnten Art werden u.a. bei elektrischen Motoren verwendet, die Teil von Aktuatoren sind und zur gesteuerten Einstellung von beweglichen Komponenten in Kraftfahrzeugen dienen, beispielsweise zum Betätigen von Klappen in der Klimaanlage (vgl. z.B. EP 1 267 479 A1). Nachteilig ist, dass die Motoren bei der Ansteuerung Vibrationen erzeugen können, die unerwünschte Geräuschentwicklungen verursachen. So ist die Klimaanlage üblicherweise in einem Gehäuse untergebracht, das eine Art Resonanzkasten bildet. Es wurde festgestellt, dass die Vibrationen, welche bei der Betätigung des elektrischen Motors erzeugt werden, durch das Gehäuse derart verstärkt werden können, dass sie zu einer übermässigen und von den Autoinsassen als störend empfundenen Geräuschentwicklung führen.

Zur Verringerung der bei der Ansteuerung erzeugten Vibrationen, ist es bekannt, den elektrischen Motor im Schrittbetrieb anzusteuern und den Antriebsstrom in den Motorwicklungen innerhalb eines Schrittes sinusförmig zu variieren. Dies hat aber den Nachteil, dass die dazu notwendige Ansteuerungselektronik zusätzliche, relativ teure Komponenten benötigt, um den Strom in den Motorwicklungen laufend erfassen zu können.

Im Weiteren ist ein elektrischer Motor, welcher zum Einstellen von beweglichen Komponenten in Kraftfahrzeugen verwendet wird, so anzusteuern, dass auch bei veränderlichen äusseren Bedingungen wie Umgebungstemperatur (im Folgenden auch Ta genannt) und Speisespannung (im Folgenden auch Vs genannt) ein zuverlässiger Betrieb gewährleistet ist. Die Speisespannung für den elektrischen Motor, welche von der Batterie des Kraftfahrzeugs geliefert wird, sowie die Temperatur Ta aussen am elektrischen Motor können erheblichen zeitlichen Schwankungen unterworfen sein. Üblicherweise wird für Kraftfahrzeuge verlangt, dass das Einstellen einer beweglichen Komponente für Temperaturen Ta im Bereich von -40 Grad Celsius bis 85 Grad Celsius und für eine Speisespannung Vs im Bereich von 9V bis 16V zuverlässig funktionieren soll.

Aus der DE 100 50 239 A1 ist ein Verfahren zur Bestimmung der Ist-Drehzahl bei bürstenlosen, sensorlosen Geichstrommotoren bekannt, bei welchem durch Ausmessen der Flanken des Kommutierungsimpulses die Zeitdauer zwischen zwei Kommutierungsimpulsen bestimmt wird.

Ausgehend von diesem Stand der Technik ist es Aufgabe der vorliegenden Erfindung, einen Aktuator mit einer Ansteuerungselektronik sowie ein Verfahren anzugeben, welche bzw. welches eine geräuschreduzierte und zuverlässige Ansteuerung eines elektrischen Motors ermöglicht und möglichst einfach und kostengünstig ist.

Diese Aufgabe wird durch ein erfindungsgemässes Verfahren gemäss Anspruch 1 bzw. durch eine erfindungsgemässen Heizungs-, Lüftungs- und/oder Klimaanlage gemäss dem unabhängigen Vorrichtungsanspruch 4 gelöst. Die weiteren Ansprüche geben bevorzugte Ausführungen an.

Die Erfindung basiert auf der Erkenntnis, dass die elektrischen Motoren, wie sie in Aktuatoren für Kraftfahrzeuge eingesetzt werden, üblicherweise in überdimensionierter Art und Weise angesteuert werden. Bekannte Ansteuerungen sind so ausgelegt, dass der Motor auch unter den "schlechtesten" äusseren Bedingungen - d.h. gemäss obigem Beispiel bei Ta = 85 Grad Celsius und Vs = 9V - ein genügendes Drehmoment erzeugt. Unter normalen äusseren Bedingungen, die üblicherweise herrschen, ist jedoch das vom Motor erzeugte Drehmoment bzw. die erzielte Leistung wesentlich zu hoch, sodass Vibrationen bzw. Geräusche in erhöhtem Masse erzeugt werden und die Bilanz von aufgewandter und benötigter Energie schlecht ist.

Die Erfindung wird im Folgenden anhand von Ausführungsbeispielen unter Bezugnahme auf Figuren erläutert. Es zeigen
Fig. 1 schematisch einen Aktuator mit einer erfindungsgemässen Ansteuerungselektronik;
Fig. 2 ein Beispiel des zeitlichen Verlaufs einer Last auf einen elektrischen Motor und den zeitlichen Verlauf der Drehgeschwindigkeit, welche sich beim Rotor bei der Ansteuerung gemäss einem ersten Ausführungsbeispiel des erfindungsgemässen Verfahrens einstellt;
Fig. 3 die zeitliche Änderung der Spannung in den Motorwicklungen bei der Ansteuerung gemäss dem ersten Ausführungsbeispiel des erfindungsgemässen Verfahrens;
Fig. 4 einen Aktuator mit einer erfindungsgemässen Ansteuerungselektronik;
Fig. 5 schematisch eine Klimaanlage eines Kraftfahrzeuges, für welche das erfindungsgemässe Verfahren bzw. die erfindungsgemässe Ansteuerungselektronik verwendbar ist; und
Fig. 6 schematisch einen Querschnitt durch das Gehäuse einer Klimaanlage.

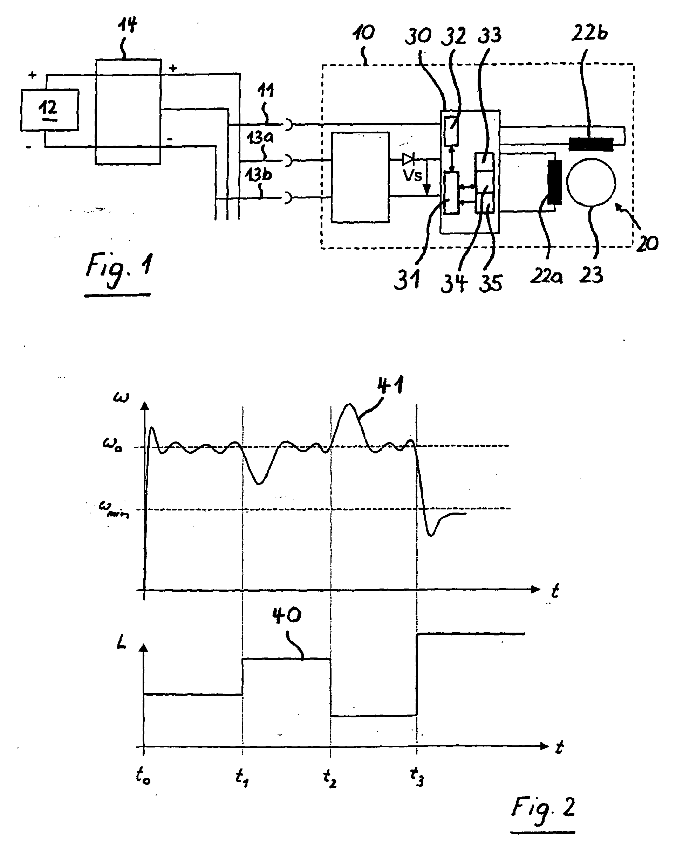

Fig. 1 zeigt einen elektrischen Motor 20 und eine damit verbundene Ansteuerungselektronik 30. Sie sind im Fig. 1 gezeigten Beispiel Komponenten eines Aktuators 10, der über eine Busleitung 11 mit einer zentralen Kontrolleinheit 14 und über Versorgungsleitungen 13a und 13b mit einer Stromversorgungseinheit 12 z.B. in einer Form einer Batterie verbunden ist. Der elektrische Motor 20 ist ein bürstenloser Motor und umfasst Statorwicklungen 22a, 22b und einen Rotor 23 mit Permanentmagneten. Zur Ansteuerung des elektrischen Motors 20 werden die Statorwicklungen 22a und 22b in einer bestimmten zeitlichen Folge bestromt, sodass der Rotor 23 in Drehung versetzt wird. Je nach Ansteuerungsart kann der elektrische Motor 20 z.B. als Schrittmotor oder als bürstenloser Gleichstrommotor betrieben werden.

Die Ansteuerungselektronik 30 umfasst eine zentrale Rechnereinheit 31 (z.B. Mikroprozessor), eine Speichereinheit 32, eine Schaltung 33 mit Transistoren, die beim Bestromen der Wicklungen 22a, 22b zeitlich koordiniert geöffnet bzw. gesperrt werden, einen Impulserzeuger 34, mit welchem Impulse erzeugbar sind zum Öffnen bzw. Sperren der Transistoren in der Schaltung 33, und Erfassungsmittel 35 zum Erfassen der Spannungen an den Wicklungen 22a, 22b und/oder der durch die Wicklungen 22a, 22b fliessenden Stromes.

Die Ansteuerungselektronik 30 ist vorzugsweise als IC ("integrated circuit"), insbesondere ASIC ("application specific integrated circuit"), ausgebildet.

Die Ansteuerungselektronik 30 und der elektrische Motor 20 bilden zusammen einen Regelkreis. Als Regelgrösse wird die Drehgeschwindigkeit verwendet, welche von der auf den Motor 20 wirkenden Last abhängig ist. Als Stellgrösse wird der Strompegel in den Motorwicklungen 22a, 22b verwendet. Bei der Regelung wird die Regelgrösse wiederkehrend ermittelt ("Istwert"), mit einem vorgegebenen Sollwert verglichen und die Stellgrösse entsprechend der Abweichung zwischen Ist- und Sollwert ("Regelabweichung") eingestellt. Diese Art von Regelung hat den Vorteil, dass das vom Motor 20 erzeugte Drehmoment an das Drehmoment angepasst werden kann, welches bei der momentanen Last gerade benötigt wird, um den Rotor 23 in Drehung zu versetzen. Dadurch kann verhindert werden, dass der Motor 20 allzu hohe Drehmomente erzeugt, die gar nicht notwendig wären, um den Rotor 23 bei der momentanen Last zu drehen. Durch die Reduzierung des Drehmoments auf das momentan benötigte Mass können die vom Motor 20 erzeugten Vibrationen reduziert werden, wodurch ein stark geräuschreduzierter Betrieb ermöglicht wird.

Bei der Anwendung der Ansteuerungselektronik 30 in einem Aktuator 10 zur Einstellung einer Klappe in einem Kraftfahrzeug wird der Sollwert für die Regelgrösse so festgelegt, dass der Motor 20 in einem bestimmten Bereich der Speisespannung Vs und der Umgebungstemperatur Ta (gemäss obigem Beispiel 9V <= Vs <= 16V und -40 Grad Celsius <= Ta <= 85 Grad Celsius) zuverlässig arbeitet. Insbesondere soll garantiert sein, dass der Motor 20 bei den "extremsten Bedingungen" (Vs = 16V, Ta = 85 Grad Celsius) nicht überhitzt und bei den "schlechtesten" Bedingungen (Vs = 9V, Ta = 85 Grad Celsius) noch das nötige Drehmoment zum Einstellen der beweglichen Komponente erzeugt.

Nachfolgend wird ein Ausführungsbeispiel des Verfahrens zur Ansteuerung eines elektrischen Motors 20 erklärt.

### 1. Ausführungsbeispiel

Als Regelgrösse wird die Drehgeschwindigkeit ω des Rotors 23 verwendet und die gewünschte Solldrehgeschwingkeit ω₀ vorgegeben. Weiter kann eine minimale Drehgeschwindigkeit ωₘᵢₙ vorgegeben werden, die, wie unten erläutert, dazu dient, eine maximal mögliche Verdrehung eines mit dem Motor 20 verbundenen Stellelements zu erkennen.

Der elektrische Motor 20 wird mittels der Ansteuerungselektronik 30 durch Autokommutation angesteuert und wird somit als bürstenloser Gleichstrommotor verwendet. Bei dieser Art der Ansteuerung werden die Motorwicklungen 22a, 22b nicht mit einer festen Schrittfrequenz bestromt, sondern es wird bei jedem Schritt ein Parameter bestimmt, welcher den Zeitpunkt zum Ausführen des nächsten Schritts festlegt. Als Parameter dient z.B. die momentane Position des Rotors 23.

Der Motor 20 wird wie folgt angesteuert bzw. geregelt:
- Beim ersten Aktivieren des Motors 20 werden die Wicklungen 22a, 22b kurzzeitig bestromt, um den Rotor 23 vorerst in einer bestimmten Position festzuhalten.
- Dann wird der Autokommutationsmodus eingeschaltet. Dabei erfasst die Ansteuerungselektronik 30 wiederkehrend die momentane Drehgeschwindigkeit ("Istwert"), bestimmt die Abweichung von der Solldrehgeschwindigkeit und führt eine Regelung nach folgenden Kriterien durch:
   a)Ist die momentane Drehgeschwindigkeit kleiner als der Sollwert ω₀, wird der Strompegel erhöht, um eine Erhöhung des vom Motor 20 erzeugten Drehmoments zu erzielen.
   b)Ist die momentane Drehgeschwindigkeit grösser als der Sollwert ω₀, wird der Strompegel verringert, um eine Reduzierung des vom Motor 20 erzeugten Drehmoments zu erzielen.
   c)Ist die momentane Drehgeschwindigkeit kleiner als die minimale Drehgeschwindigkeit ωₘᵢₙ, befindet sich das mit dem Motor 20 verbundene Stellelement im Anschlag und die Stromversorgung des Motors 20 wird gestoppt.

Zur Regelung des Strompegels wird als Impulserzeuger 34 ein Zerhacker verwendet, mittels welchem durch Pulsbreitenmodulation Impulse erzeugbar sind. Durch die Impulse gesteuert werden die Transistoren in der Schaltung 33 in einer bestimmten Frequenz (z. B. 20 kHz) geöffnet und gesperrt, sodass die Bestromung der Wicklungen 22a, 22b pro Schritt mehrmals unterbrochen wird. Durch Vergrössern bzw. Verringern der Einschaltdauer, während der die Transistoren innerhalb von einem Zyklus geöffnet sind, kann der Strompegel und schliesslich das erzeugte Drehmoment eingestellt werden.

Fig. 2 zeigt in der unteren Kurve 40 ein Beispiel für die zeitliche Änderung der Last, L, und in der oberen Kurve 41 den dazugehörenden zeitlichen Verlauf der Drehgeschwindigkeit bei der Regelung. Die horizontale Achse entspricht der Zeit t.

Zum Zeitpunkt t₀= 0 wird der elektrische Motor unter Last eingeschaltet. Die Last wird dann im Zeitintervall t₀ < t < t₁ konstant gehalten. Die Drehgeschwindigkeit wird durch die Regelung auf den Sollwert ω₀ gebracht und auf diesem gehalten. Zum Zeitpunkt t₁ wird die Last erhöht, die Drehgeschwindigkeit nimmt kurzzeitig ab, bis diese sich nach einer gewissen Zeit wieder um den Sollwert ω₀ einpendelt. Zum Zeitpunkt t₂ wird die Last reduziert, die Drehgeschwindigkeit nimmt kurzzeitig zu, bis diese sich nach einer gewissen Zeit wieder um den Sollwert ω₀ einpendelt. Beim Zeitpunkt t₃ befindet sich das mit dem Motor verbundene Stellelement im Anschlag, sodass es nicht weiter gedreht werden kann und die Last auf den Motor 20 stark zunimmt. Die Drehgeschwindigkeit nimmt stark ab und übersteigt nicht mehr den minimalen Wert ωₘᵢₙ. Die Stromversorgung für den Motor 20 wird in diesem Fall ausgeschaltet.

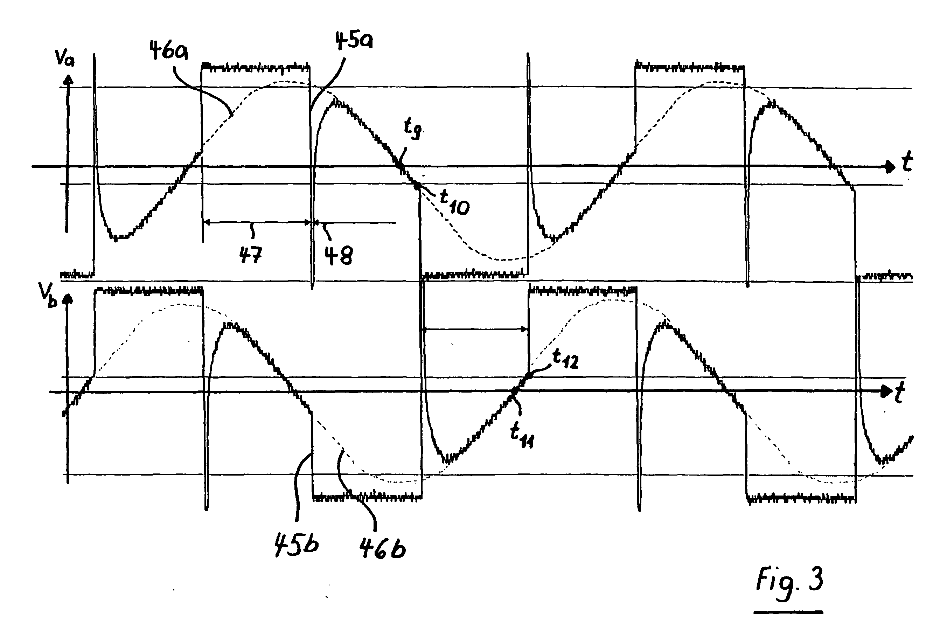

Anhand von Fig. 3 soll eine vorteilhafte Art der Autokommutierung am Beispiel eines Motors 20 mit zwei Spulen A und B erklärt werden. Die obere Kurve 45a zeigt die Spannung Va in der Spule A in Abhängigkeit von der Zeit t, die untere Kurve 45b zeigt die Spannung Vb in der Spule B in Abhängigkeit von der Zeit t. Die gestrichelte Kurve 46a bzw. 46b ist sinusförmig und stellt die Spannung dar, welche der mit Permanentmagneten versehenen Rotor 23 in der jeweiligen Spule A bzw. B induziert. Beiden Spulen A, B werden alternierend bestromt. Die jeweils unbestromte Spule wird als Messspule verwendet, um den Zeitpunkt des Nulldurchgangs (t₉) der (induzierten) Spannung zu bestimmen.

Im Beispiel gemäss Fig. 3 entspricht die Spannung in der Spule A nach der ersten Bestromung 47 und Entladung 48 der vom Rotor 23 induzierten Spannung. Wenn diese das Vorzeichen wechselt (Zeitpunkt t₉ in Fig. 3), wird eine bestimmte Zeit gewartet und dann die Bestromung in Spule B ausgeschaltet bzw. in Spule A eingeschaltet (Zeitpunkt t₁₀ in Fig. 3). Spule B dient nun als Messspule. Wenn die Spannung in der Spule B das Vorzeichen wechselt (Zeitpunkt t₁₁ in Fig. 3) wird eine bestimmte Zeit gewartet und dann die Bestromung in Spule A ausgeschaltet bzw. in Spule B eingeschaltet (Zeitpunkt t₁₂ in Fig. 3).

Die Zeitdifferenz t₁₁-t₉ ist umgekehrt proportional zur momentanen Drehgeschwindigkeit des Rotors 23 und kann somit zum Bestimmen des Istwertes bei der Regelung gemäss dem ersten Ausführungsbeispiel verwendet werden.

Die Zeitdifferenz t₁₀-t₉ bzw. t₁₂-t₁₁ entspricht einer Kommutationsverzögerung (bzw. einem Kommutationsvoreilen, falls sie positiv ist). Sie kann fest vorgegeben sein, sodass t₁₀-t₉ und t₁₂-t₁₁ konstant sind, wobei auch Null denkbar ist. Es ist auch möglich, zusätzlich zur Regelung der Drehgeschwindigkeit ω auch die Zeitdifferenz t₁₀-t₉ bzw. t₁₂-t₁₁ zu regeln, sodass eine verfeinerte Regelung der Drehgeschwindigkeit ω oder des Drehmomentes resultiert.

Das hier angegebene Verfahren der Autokommutierung hat den besonderen Vorteil, dass keine zusätzlichen Sensoren wie Hall-Sensoren benötigt werden, um die momentane Position bzw. Drehgeschwindigkeit des Rotors 23 zu erfassen. Die Ansteuerungselektronik kann somit für die verschiedensten Arten von elektrischen Motoren, insbesondere auch sensorlosen Motoren, eingesetzt werden.

Soweit nicht schon erwähnt, haben das erfindungsgemässe Verfahren und die erfindungsgemässe Ansteuerungselektronik folgende Vorteile:
- Das Drehmoment bzw. die Motorleistung wird durch die Regelung dem gerade benötigten Wert angepasst. Da bei Kraftfahrzeugen unter normalen Bedingungen für Vs und Ta das benötigte Drehmoment bzw. die benötigte Motorleistung relativ niedrig ist, können die vom Motor erzeugten Vibrationen wesentlich reduziert werden und somit kann ein geräuschreduzierter Betrieb gewährleistet werden. Auch werden die mechanischen Komponenten weniger stark beansprucht.
- Da die Bestromung im zeitlichen Mittel tiefer ist, erhitzen Motor und Ansteuerungselektronik weniger stark, was u.a. zu einer Erhöhung ihrer Lebensdauer führt.
- Mittels der Regelung kann auf einfache Art und Weise die Position der maximal möglichen Verdrehung eines Stellelements detektiert werden, ohne dass zusätzliche Komponenten erforderlich sind.

### Anwendung

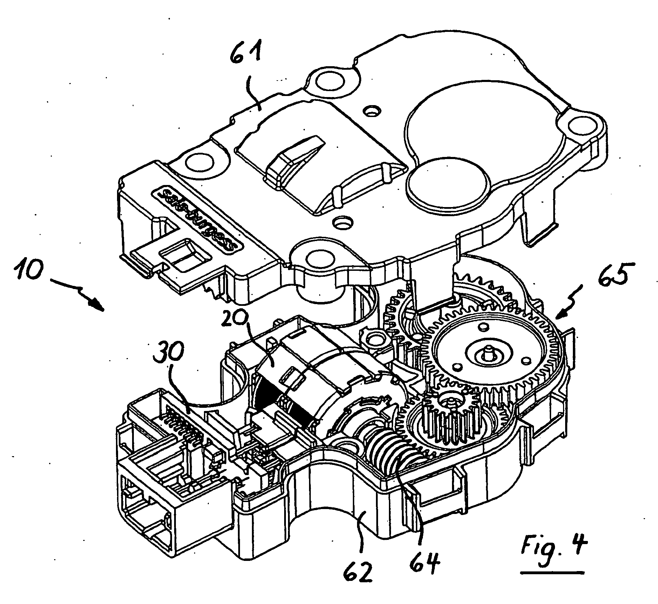

Fig. 4 zeigt einen Aktuator 10 zum Einstellen eines Stellelements. Der Aktuator 10 umfasst einen Gehäusedeckel 61 und einen Gehäuseboden 62, in welchem folgende Komponenten aufgenommen sind: Ansteuerungselektronik 30, elektrischer Motor 20 mit einer Antriebswelle 64, welche mit einem Schneckenrad versehen ist, und einem aus Zahnrädern gebildetes Untersetzungsgetriebe 65.

Der Aktuator 10 gemäss Fig. 4 wird zur Einstellung einer Klappe in einer Heizungs-, Lüftungs- und/oder Klimaanlage eines Kraftfahrzeuges verwendet.

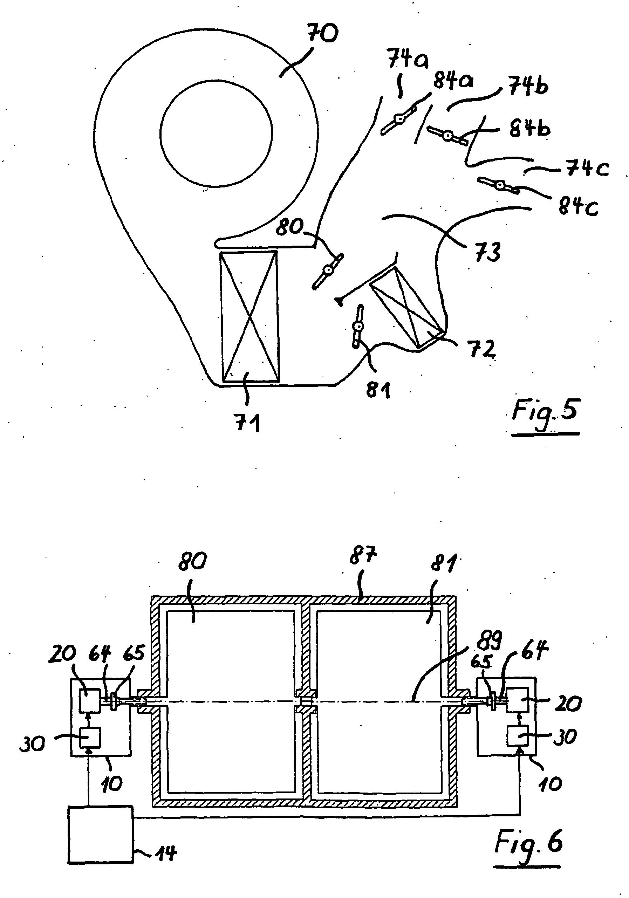

Fig. 5 zeigt schematisch eine Klimaanlage in einem Kraftfahrzeug. Sie umfasst ein Radialgebläse 70, mittels welchem Aussenluft angesaugt und via einen Filter zum Verdampfer 71 befördert werden kann. Dieser dient zum Abkühlen und Entfeuchten der angesaugten Luft. Weiter weist die Klimaanlage einen Heizkörper 72 auf zum Erwärmen der durchströmenden Luft sowie eine Mischungszone 73, in welcher Kaltluft vom Verdampfer 71 und Warmluft vom Heizkörper 72 gemischt werden. Am Ende der Klimaanlage sind verschiedene Auslässe 74a, 74b, 74c vorhanden, durch welche die gemischte Luft schliesslich in das Fahrzeuginnere gelangen kann. Auslass 74a beispielsweise führt zur Windschutzscheibe, Auslass 74b zu den Mitteldüsen und Auslass 74c in den Fussraum.

In der in Fig. 5 gezeigten Klimaanlage befindet sich zwischen dem Verdampfer 71 und der Mischungszone 73 eine erste Klappe 80 sowie zwischen dem Verdampfer 71 und dem Heizkörper 72 eine zweite Klappe 81. Die Klappen 80, 81 sind um eine Achse beweglich gelagert, sodass durch ein entsprechendes Verstellen der Luftstrom zur Mischungszone 73 bzw. zum Heizkörper 72 reguliert und schliesslich Kalt- und Warmluft in der Mischungszone 73 in gewünschter Art und Weise gemischt werden können. Die Auslässe 74a, 74b und 74c sind ebenfalls mit Klappen 84a, 84b bzw. 84c versehen, die jedoch in der Regel manuell betätigbar sind.

Fig. 6 zeigt einen Querschnitt durch das Gehäuse 87 der Klimaanlage mit den beiden Klappen 80, 81, die jeweils mit einem Aktuator 10 verbunden und um die Achse 89 beweglich gelagert sind. Die linke Kammer führt beispielsweise zur Mischungszone 73, die rechte Kammer zum Heizkörper 72. Die Aktuatoren 10 sind mit der zentralen Kontrolleinheit 14 verbunden zum Empfangen von Steuersignalen, um so die Stellung der Klappen 80, 81 in Abhängigkeit von Sensordaten regeln zu können.

## Patentansprüche

1. Verfahren zum Einstellen einer Klappe (80, 81) in einer Heizungs-, Lüftungs- und/oder Klimaanlage eines Kraftfahrzeuges mittels eines Aktuators (10), der einen elektrischen Motor (20) mit einer Ansteuerungselektronik (30) umfasst,
wobei eine Solldrehgeschwindigkeit ωₒ für den Rotor (23) des Motors derart festgelegt ist, dass der Motor in einem bestimmten Bereich der. Speisespannung und der Umgebungstemperatur zuverlässig arbeitet, und wobei
beim ersten Aktivieren des Motors die Wicklungen (22a, 22b) des Motors kurzzeitig bestromt werden, um den Rotor vorerst in einer bestimmten Position festzuhalten,
und dann der Rotor durch Autokommutierung in Rotation versetzt wird, **dadurch gekennzeichnet, dass**
die Ansteuerungselektronik wiederkehrend die momentane Drehgeschwindigkeit des Rotors erfasst, die Abweichung von der Solldrehgeschwindigkeit ω₀ bestimmt und eine Regelung nach folgenden Kriterien durchführt:
- Ist die momentane Drehgeschwindigkeit kleiner als die Solldrehgeschwindigkeit ω₀, wird der Strompegel erhöht, um eine Erhöhung des vom Motor erzeugten Drehmoments zu erzielen.
- Ist die momentane Drehgeschwindigkeit grösser als die Solldrehgeschwindigkeit ω₀, wird der Strompegel verringert, um eine Reduzierung des vom Motor erzeugten Drehmoments zu erzielen.
- Ist die momentane Drehgeschwindigkeit kleiner als eine minimale Drehgeschwindigkeit, befindet sich die Klappe im Anschlag und die Stromversorgung des Motors wird gestoppt.

2. Verfahren nach Anspruch 1, **dadurch gekennzeichnet, dass** zum Bestimmen der momentanen Drehgeschwindigkeit die Spannungen ausgewertet werden, welche bei der Rotation des Rotors (23) in den Motorwicklungen (22a, 22b) induziert werden.

3. Verfahren nach Anspruch 2, **dadurch gekennzeichnet, dass** die Zeitdifferenz zwischen Nulldurchgang (t₉, t₁₁) einer induzierten Spannung (Va, Vb) und Kommutierungszeitpunkt (t₁₀, t₁₂) der Motorwicklungen (22a, 22b) geregelt wird.

4. Heizungs-, Lüftungs- und/oder Klimaanlage eines Kraftfahrzeuges, mit einer Klappe (80, 81), die mittels eines Aktuators (10) einstellbar ist, der einen elektrischen Motor (20) und eine Ansteuerungselektronik (30) zur Ansteuerung des Motors aufweist, **dadurch gekennzeichnet, dass**
die Ansteuerungselektronik Regelmittel (31, 32, 33, 34, 35) umfasst, mittels welchen die Stromversorgung des Motors (20) in Abhängigkeit von der auf den Motor wirkenden Last einstellbar ist, und die Ansteuerungselektronik so eingerichtet ist, dass bei deren Betrieb das Verfahren nach einem der vorangehenden Ansprüche durchführbar ist.

5. Anlage nach Anspruch 4, **dadurch gekennzeichnet, dass** die Regelmittel folgende Komponenten umfasst:
- eine Auswerteeinheit (31, 32, 35) zum wiederkehrenden Bestimmen der Abweichung der Drehgeschwindigkeit des Rotors (23) von einem vorgegebenen Sollwert; und
- Einstellmittel (33, 34) zum Einstellen der Stromversorgung des Motors (20) in Abhängigkeit der Abweichung.

6. Anlage nach einem der Ansprüche 4 bis 5, **dadurch gekennzeichnet, dass** mit der Auswerteeinheit (31, 32, 35) Werte für die Spannungen erfassbar und auswertbar sind, welche bei der Rotation des Rotors (23) in den Motorwicklungen (22a, 22b) induziert werden, und vorzugsweise aufgrund dieser Werte der jeweilige Kommutierungszeitpunkt (t₁₀, t₁₂) der Motorwicklungen bestimmbar ist.

7. Anlage nach einem der Ansprüche 4 bis 6, **dadurch gekennzeichnet , dass** die Einstellmittel eine Transistorschaltung (33) und einen Impulserzeuger (34) umfassen, wobei die Impulse vorzugsweise pulsbreitenmoduliert sind.

## Claims

1. Method for adjusting a flap (80, 81) in a heating, ventilation and/or air conditioning arrangement of a power-driven vehicle by means of an actuator (10), which comprises an electric motor (20) with control electronics,
wherein a desired rotation speed ω₀ for the rotor (23) of the motor is chosen such that the motor works reliably within a certain range of the supply voltage and of the ambient temperature, and wherein,
on the first activation of the motor, the windings (22a, 22b) of the motor are supplied with current for a short time, in order to hold the rotor first in a certain position,
and then the rotor is set in rotation by means of autocommutation, **characterized in that**
the control electronics determines repeatedly the instantaneous rotation speed of the rotor, determines the variation from the desired rotation speed ω₀ and performs a regulation according to the following criteria:
- If the instantaneous rotation speed is smaller than the desired rotation speed ω₀, the current level is increased, in order to obtain an increase in the torque produced by the motor.
- If the instantaneous rotation speed is greater than the desired rotation speed ω₀, the current level is decreased, in order to obtain an decrease in the torque produced by the motor.
- If the instantaneous rotation speed is smaller than a minimal rotation speed, then the flap is against the stop and the current supply of the motor is stopped.

2. Method according to claim 1, **characterized in that**, for determining the instantaneous rotation speed, the voltages are evaluated which are induced in the windings of the motor (22a, 22b) during rotation of the rotor (23).

3. Method according to claim 2, **characterized in that** the time difference between the zero passage (t₉, t₁₁) of an induced voltage (Va, Vb) and the instant of commutation (t₁₀, t₁₂) of the motor windings (22a, 22b) is regulated.

4. Heating, ventilation and/or air conditioning arrangement of a power-driven vehicle, with a flap (80, 81), which is adjustable by means of an actuator (10), which comprises an electric motor (20) and control electronics (30) for controlling the motor, **characterized in that** the control electronics comprise regulating means (31, 32, 33, 34, 35), by means of which the current supply of the motor is adjustable as a function of the load acting on the motor, and the control electronics are configured such that during their operation the method according to one of the preceding claims is carried out.

5. Arrangement according to claim 4, **characterized in that** the regulating means comprise the following components:
- an evaluating unit (31, 32, 35) for determining repeatedly the deviation of the rotation speed of the rotor (23) from a given desired value; and
- adjustment means (33, 34) for adjusting the current supply of the motor (20) as a function of the deviation.

6. Arrangement according to one of the claims 4 to 5, **characterized in that**, by means of the evaluating unit (31, 32, 35), values for the voltages can be determined and evaluated, which are induced in the motor windings (22a, 22b) during rotation of the rotor (23), and preferably by means of these values, the respective instant of commutation (t₁₀, t₁₂) of the motor windings is determinable.

7. Arrangement according to one of the claims 4 to 6, **characterized in that** the adjustment means comprise a transistor circuit (33) and a pulse generator (34), wherein the pulses are preferably pulse-width modulated.

## Revendications

1. Procédé pour ajuster un clapet (80, 81) dans une installation de chauffage, de ventilation et/ou de climatisation d'une automobile au moyen d'un actionneur (10), qui comprend un moteur électrique (20) avec un dispositif électronique de commande (30),
où une vitesse de rotation ω₀ à atteindre par le rotor (23) du moteur est déterminée de telle sorte que le moteur fonctionne de manière fiable dans une plage prédéterminée de tension d'alimentation et de température ambiante, et où
lorsque le moteur est activé la première fois, les enroulements (22a, 22b) du moteur sont en peu de temps alimentés en courant, afin de tenir le rotor d'abord dans une certaine position,
ensuite le rotor est entraîné en rotation par autocommutation, **caractérisé en ce que**
le dispositif électronique de commande saisit de manière répétitive la vitesse momentanée de rotation du rotor, détermine la variation par rapport à la vitesse de rotation à atteindre ω₀ et effectue un réglage selon les critères suivants:
- Si la vitesse de rotation momentanée est plus petite que la vitesse de rotation à atteindre ω₀, le niveau de courant est augmenté, afin d'atteindre une augmentation du couple produit par le moteur.
- Si la vitesse de rotation momentanée est plus grande que la vitesse de rotation à atteindre ω₀, le niveau de courant est réduit, afin d'atteindre une diminution du couple produit par le moteur.
- Si la vitesse de rotation momentanée est plus petite qu'une vitesse de rotation minimale, le clapet se trouve à la butée et l'alimentation en courant du moteur est arrêtée.

2. Procédé selon la revendication 1, **caractérisé en ce que**, afin de déterminer la vitesse de rotation momentanée, les tensions sont évaluées, lesquelles sont induites dans les enroulements (22a, 22b) du moteur lors de la rotation du rotor (23).

3. Procédé selon la revendication 2, **caractérisé en ce que** la différence de temps entre le passage par zéro (t₉, t₁₁) d'une tension induite (Va, Vb) et le moment de commutation (t₁₀, t₁₂) des enroulements (22a, 22b) du moteur est réglée.

4. Installation de chauffage, de ventilation et/ou de climatisation d'une automobile, avec un clapet (80, 81), qui est ajustable au moyen d'un actionneur (10) comprenant un moteur électrique (20) et un dispositif électronique de commande (30) pour commander le moteur, **caractérisée en ce que**
le dispositif électronique de commande comprend des moyens de réglage (31, 32, 33, 34, 35), au moyen desquels l'alimentation en courant du moteur (20) est ajustable en fonction de la charge agissant sur le moteur, et le dispositif électronique de commande est configuré de telle manière que, lors de son opération, le procédé selon l'une des revendications précédentes est exécutable.

5. Installation selon la revendication 4, **caractérisée en ce que** les moyens de réglage comprennent les composants suivants:
- un dispositif d'évaluation (31, 32, 35) pour déterminer de manière répétitive la variation de la vitesse de rotation du rotor (23) par rapport une valeur prédéterminée à atteindre; et
- des moyens d'ajustement (33, 34) pour ajuster l'alimentation en courant du moteur (20) en fonction de la variation.

6. Installation selon l'une des revendications 4 à 5, **caractérisée en ce que**, au moyen du dispositif d'évaluation (31, 32, 35), des valeurs pour les tensions peuvent être déterminées et évaluées, lesquelles sont induites dans les enroulements (22a, 22b) du moteur lors de la rotation du rotor (23), et de préférence, le moment de commutation (t₁₀, t₁₂) respectif des enroulements (22a, 22b) est déterminable sur la base de ces valeurs.

7. Installation selon l'une des revendications 4 à 6, **caractérisée en ce que** les moyens d'ajustement comprennent un circuit à transistors (33) et un générateur d'impulsions (34), les impulsions étant de préférence modulées par largeur d'impulsion.
